# EUROPÄISCHE PATENTSCHRIFT

(11) **EP 2 041 533 B1**
(45) Veröffentlichungstag und Bekanntmachung des Hinweises auf die Patenterteilung: **28.02.2018**
(21) Anmeldenummer: 07787197.8
(22) Anmeldetag: 06.07.2007
(51) Int. Cl.: G01G 21/28, G01G 11/00

(54) **WAAGENVORRICHTUNG**
WEIGHING SCALES
SYSTÈME DE BALANCE

(30) Priorität: 14.07.2006 DE 102006033651
(43) Veröffentlichungstag der Anmeldung: 01.04.2009
(73) Patentinhaber: Bizerba SE & Co. KG, 72336 Balingen (DE)
(72) Erfinder: BERGER, Hermann, 31079 Adenstedt (DE)
(74) Vertreter: Hoeger, Stellrecht & Partner Patentanwälte mbB
(86) Internationale Anmeldenummer: PCT/EP2007/056915
(87) Internationale Veröffentlichungsnummer: WO 2008/006783

(56) Entgegenhaltungen:
- DE-A1-102005 006 002
- JP-A- 9 297 051

## Beschreibung

Die Erfindung betrifft eine Waagenvorrichtung, umfassend eine Wägeeinrichtung, eine Förderbandeinrichtung, über welche der Wägeeinrichtung Wägegut zuführbar ist, eine Säule, welche als Hohlkörper ausgebildet ist, mit einer ersten Seitenwand und einer beabstandeten zweiten Seitenwand, und eine Konsole mit einer Konsolenwand und einer zweiten Konsolenwand.

Aus der DE 10 2005 006 002 A1 ist eine Kontrollwaage mit einem Maschinenkörper bekannt, wobei der Maschinenkörper aus einem rückseitigen Hohlkörper und einer frontseitigen Aufspannplatte besteht, welche den Hohlkörper zumindest an zwei einander gegenüberliegenden Seiten zumindest stellenweise überragt und so einen Befestigungsflansch ausbildet.

Aus der JP 09297051 A ist eine Förderbandvorrichtung bekannt, welche einen Gewichtsdetektor umfasst. Es ist dabei ein Stand vorgesehen, welcher auf einer Basis angeordnet ist. An dem Stand ist ein Arm angeordnet, wobei ein Förderband an einem Teil des Arms über den Gewichtsdetektor gehalten ist.

Aus der EP 1 416 256 A1 ist ein Behälter zum Sammeln von zurückgewiesenen Artikeln bei einer Gewichtsprüfungsmaschine bekannt.

Der Erfindung liegt die Aufgabe zugrunde, eine Waagenvorrichtung der eingangs genannten Art bereitzustellen, welche auf einfache Weise herstellbar ist.

Diese Aufgabe wird bei der eingangs genannten Waagenvorrichtung erfindungsgemäß dadurch gelöst, dass die erste Konsolenwand direkt mit der ersten Seitenwand verbunden ist und die zweite Konsolenwand direkt mit der zweiten Seitenwand verbunden ist, dass die erste Konsolenwand eine Fortsetzung der ersten Seitenwand ist, dass die zweite Konsolenwand die Fortsetzung der zweiten Seitenwand ist, wobei die ausgeübten Kräfte durch die erste Konsolenwand und die zweite Konsolenwand hindurch in die erste Seitenwand und die zweite Seitenwand eben durchgeleitet sind und der Kraftverlauf höchstens um eine Wanddicke querversetzt ist, und dass die Förderbandeinrichtung und die Wägeeinrichtung an der Konsole sitzen, wobei die Konsole die Förderbandeinrichtung und die Wägeeinrichtung hält.

Bei der erfindungsgemäßen Lösung werden Kräfte (insbesondere Gewichtskräfte), welche durch die Förderbandeinrichtung und die Wägeeinrichtung ausgeübt werden, die an der Konsole sitzen, in die erste Konsolenwand und die zweite Konsolenwand eingeleitet und von dort in die erste Seitenwand und die zweite Seitenwand eingeleitet.

Dadurch, dass die Förderbandeinrichtung und die Wägeeinrichtung an der Konsole sitzen, lässt sich die Einleitung definiert durchführen mit einer Kraftrichtung, welche innerhalb der ersten Konsolenwand und der zweiten Konsolenwand liegt. Dadurch sind Querkräfte (Druckkräfte), welche normal zu der ersten Konsolenwand und der zweiten Konsolenwand wirken, minimiert. Dadurch wiederum lassen sich die erste Konsolenwand und die zweite Konsolenwand aus einem Flachmaterial wie beispielsweise Blech herstellen.

Die Kräfte lassen sich durch die erste Konsolenwand und die zweite Konsolenwand mit minimierter Kraftumlenkung (in eine Querrichtung) durchleiten und in die erste Seitenwand und die zweite Seitenwand einleiten. Sie lassen sich dort wiederum parallel zu einer Oberfläche der ersten Seitenwand und der zweiten Seitenwand ableiten. Dadurch lässt sich auch die ersten Seitenwand und die zweite Seitenwand jeweils aus einem Flachmaterial und insbesondere Blech herstellen.

Die erfindungsgemäße Waagenvorrichtung lässt sich auf einfache und kostengünstige Weise herstellen, da für die Säule und die Konsole Flachmaterialien einsetzbar sind. Die Konsole lässt sich insbesondere als offener Hohlkörper ausbilden. Durch die optimierte Krafteinleitung und -ableitung erhält man eine hohe Stabilität bei einfacher Herstellbarkeit.

Die erfindungsgemäße Waagenvorrichtung weist eine hohe Torsionssteifigkeit an der Säule und Konsole auf. Dadurch sind Wägeergebnisse mit hoher Genauigkeit reproduzierbar.

Die erfindungsgemäße Waagenvorrichtung lässt sich auf einfache Weise an Anwendungen anpassen. Beispielsweise wird sie als Kontrollwaagenvorrichtung eingesetzt, um zu kontrollieren, ob Wägegut innerhalb von Toleranzgrenzen ein vorgegebenes Gewicht aufweist. Eine solche Kontrollwaagenvorrichtung ist üblicherweise Teil einer Fertigungskette und/oder Kontrollkette. Durch die einfache Herstellbarkeit lässt sich die erfindungsgemäße Waagenvorrichtung auf einfache Weise so ausgestalten, dass sie in eine Fertigungskette bzw. Kontrollkette einpassbar ist.

Die erste Konsolenwand ist eine Fortsetzung der ersten Seitenwand. Dadurch lässt sich die Kräfteeinleitung von der ersten Konsolenwand in die erste Seitenwand optimieren mit Minimierung der Kraftumlenkungsrichtung.

Die erste Konsolenwand ist direkt mit der ersten Seitenwand verbunden. Dadurch ist die Krafteinleitung optimiert. Dadurch lassen sich die erste Konsolenwand und die erste Seitenwand aus einem Flachmaterial herstellen.

Es ist ferner günstig, wenn die erste Konsolenwand und die erste Seitenwand sich berühren. Dadurch lässt sich die Konsole auf einfache Weise an der Säule fixieren, wobei die Krafteinleitung so erfolgt, dass Flachmaterialien und insbesondere Blechmaterialien einsetzbar sind.

Die zweite Konsolenwand ist die Fortsetzung der zweiten Seitenwand, die zweite Konsolenwand ist direkt mit der zweiten Seitenwand verbunden und günstigerweise berühren sich die zweite Konsolenwand und die zweite Seitenwand.

Die erfindungsgemäße Waagenvorrichtung lässt sich auf einfache und kostengünstige Weise herstellen, wenn die erste Seitenwand und die zweite Seitenwand aus einem Flachmaterial hergestellt sind. Aus dem gleichen Grund ist es günstig, wenn die erste Konsolenwand und die zweite Konsolenwand aus einem Flachmaterial hergestellt sind. Durch Schneiden und Biegen des Flachmaterials lassen sich die entsprechenden Elemente der Waagenvorrichtung auf einfache Weise herstellen, wobei eine große Variabilität vorliegt.

Das Flachmaterial ist insbesondere Blech.

Insbesondere weist das Flachmaterial eine Dicke auf, welche kleiner oder gleich 3 mm ist. Es kann dabei insbesondere vorgesehen sein, dass diese Dicke kleiner oder gleich 2 mm ist. Durch die erfindungsgemäße Lösung lässt sich eine Waagenvorrichtung realisieren, welche eine hohe Steifigkeit aufweist, wobei diese hohe Steifigkeit auch trotz der Verwendung von dünnen Flachmaterialien wie dünnen Blechen erreichbar ist.

Es kann vorgesehen sein, dass die erste Konsolenwand einstückig mit der ersten Seitenwand und die zweite Konsolenwand einstückig mit der zweiten Seitenwand verbunden ist. Dadurch ergibt sich eine optimierte Krafteinleitung von der Konsole in die Säule.

Eine hohe Variabilität ergibt sich, wenn die Konsole lösbar an der Säule fixierbar ist. Dadurch kann die Position der Konsole bezüglich der Säule eingestellt werden. Ferner lässt sich beispielsweise für die Reinigung der Waagenvorrichtung die Konsole abnehmen.

Insbesondere ist es vorgesehen, dass die Konsole höhenverstellbar an der Säule fixierbar ist. Dadurch lässt sich auf einfache Weise die Waagenvorrichtung beispielsweise an eine bestehende Fertigungskette oder Kontrollkette einpassen.

Günstig ist es, wenn zwischen der ersten Seitenwand und der zweiten Seitenwand eine Fixierungseinrichtung für die Konsole angeordnet ist. Dadurch lässt sich die Konsole auf einfache Weise an der Säule montieren und fixieren.

Bei einer Ausführungsform umfasst die Fixierungseinrichtung durchgehende Ausnehmungen für Fixierungselemente. Dadurch lässt sich die Konsole beispielsweise formschlüssig an der Säule fixieren.

Ganz besonders vorteilhaft ist es, wenn die durchgehenden Ausnehmungen mindestens näherungsweise parallel zu einer Transportrichtung der Förderbandeinrichtung orientiert sind. Es lassen sich dann die jeweilige Seitenwand und Konsolenwand miteinander verbinden, wobei die Kraftumlenkung bezüglich Querkräften (Druckkräften) minimierbar ist.

Es kann vorgesehen sein, dass die Fixierungseinrichtung mindestens eine Reihe an durchgehenden Ausnehmungen umfasst, wobei die Reihe quer zu einer Transportrichtung der Förderbandeinrichtung orientiert ist. Dadurch lässt sich auf einfache Weise eine Höhenverstellbarkeit der Konsole an der Säule realisieren. Ferner ist es möglich, die Konsole über eine Mehrzahl von Fixierungselementen an der Säule zu fixieren, um eine hohe Stabilität der Waagenvorrichtung zu erreichen.

Vorteilhafterweise weisen die erste Konsolenwand und die zweite Konsolenwand eine Fixierungseinrichtung zur Fixierung an der Säule auf. Die Fixierungseinrichtung kooperiert insbesondere mit einer Fixierungseinrichtung, welche an der Säule angeordnet ist.

Günstig ist es, wenn die Fixierungseinrichtung durchgehende Ausnehmungen für Fixierungselemente aufweist. Dadurch lässt sich die Konsole beispielsweise über Schraubelemente oder Bolzenelemente mit der Säule fixieren.

Insbesondere sind die durchgehenden Ausnehmungen mindestens näherungsweise parallel zu einer Transportrichtung der Förderbandeinrichtung orientiert. Dadurch lässt sich bei für Flachmaterial optimierter Kraftführung die Waagenvorrichtung auf einfache Weise herstellen.

Günstig ist es, wenn die Fixierungseinrichtung mindestens eine Reihe an durchgehenden Ausnehmungen umfasst, wobei die Reihe quer zu einer Transportrichtung der Förderbandeinrichtung orientiert sind. Dadurch lässt sich die Konsole auf einfache Weise an der Säule fixieren. Es ist dabei eine Fixierung der ersten Konsolenwand an der ersten Seitenwand und der zweiten Konsolenwand an der zweiten Seitenwand mittels einer Mehrzahl von Fixierungselementen wie Schraubelementen möglich, um einen sicheren Halt zu erreichen.

Günstig ist es, wenn die Konsole über Schraubenelemente und/oder Bolzenelemente mittels der ersten Konsolenwand und der zweiten Konsolenwand an der Säule fixiert ist. Über Schraubenelemente bzw. Bolzenelemente lässt sich die relative Beweglichkeit zwischen der Konsole und der Säule insbesondere in einer Richtung parallel zur Transportrichtung der Förderbandeinrichtung sperren. In einer Richtung wird die Beweglichkeit über Schraubenköpfe bzw. Bolzenköpfe gesperrt und in der anderen Richtung wird die Beweglichkeit über Anlageelemente wie beispielsweise Mutterelemente gesperrt.

Günstig ist es, wenn die erste Seitenwand und die erste Konsolenwand einander überlappen. Dadurch lässt sich die Krafteinleitung von der ersten Konsolenwand in die erste Seitenwand für Flachmaterialien optimieren, so dass eine einfache Herstellbarkeit der Waagenvorrichtung ermöglicht ist.

Aus dem gleichen Grund ist es günstig, wenn die zweite Seitenwand und die zweite Konsolenwand einander überlappen.

Günstigerweise ist zwischen der ersten Konsolenwand und der zweiten Konsolenwand mindestens eine Querstrebe angeordnet. Es kann dabei vorgesehen sein, dass die erste Konsolenwand und die zweite Konsolenwand einstückig über mindestens eine Querstrebe miteinander verbunden sind. Durch die mindestens eine Querstrebe erhält man eine Querstabilität. An Querstreben kann auch die Wägeeinrichtung fixiert werden.

Günstigerweise weisen die erste Konsolenwand und die zweite Konsolenwand jeweils eine trapezförmige Gestalt mit einer langen Seite, welche der Säule zugewandt ist, und mit einer kurzen Seite, welche der Säule abgewandt ist, auf. Dadurch lässt sich die Abstützung der Konsole an der Säule optimieren.

Günstigerweise ist eine Unterseite der ersten Konsolenwand und der zweiten Konsolenwand jeweils schräg zur Schwerkraftrichtung orientiert. Dadurch erhält man eine optimierte Abstützung der Konsole an der Säule.

Es ist ferner günstig, wenn eine Oberseite der ersten Konsolenwand und der zweiten Konsolenwand jeweils im Wesentlichen senkrecht zur Schwerkraftrichtung orientiert ist. Dadurch erhält man eine flache Oberseite, auf welcher die Förderbandeinrichtung aufsetzbar ist.

Günstig ist es, wenn die erste Seitenwand und die zweite Seitenwand jeweils einen Standbereich und einen Höhenerstreckungsbereich aufweisen, wobei die Waagenvorrichtung über die Standbereiche auf einer Unterlage aufgestellt ist und die Konsole an den Höhenerstreckungsbereichen angeordnet ist. Durch die verbreiterten Standbereiche (mit einer Breite quer zur Transportrichtung der Förderbandeinrichtung) lassen sich über die Konsole eingeleitete Kräfte optimal ableiten, so dass sich eine hohe mechanische Stabilität für die Waagenvorrichtung ergibt.

Es ist dann günstig, wenn die erste Seitenwand und die zweite Seitenwand jeweils eine L-förmige Gestalt aufweisen, um einen optimalen Stand zu gewährleisten.

Günstigerweise weist die Säule eine Standeinrichtung auf, welche sich zwischen dem Standbereich der ersten Seitenwand und dem Standbereich der zweiten Seitenwand erstreckt, wobei der Schwerpunkt der Waagenvorrichtung innerhalb oder unterhalb der Standeinrichtung liegt. Dadurch lässt sich die Waagenvorrichtung stabil aufstellen. Die Standeinrichtung ist zur "Tieferlegung" des Schwerpunkts insbesondere mit einem Ballastmaterial wie Kies oder Beton gefüllt.

Vorteilhaft ist es, wenn die erste Seitenwand und die zweite Seitenwand am Übergang zwischen dem Höhenerstreckungsbereich und dem Standbereich jeweils abgerundet ausgebildet sind. Dadurch lässt sich die Kräfteableitung optimieren. Der Übergang hat die gleiche Funktionsweise wie der Übergangsbereich an einem Baumstamm zum Wurzelbereich. (Die Standbereiche entsprechen dem Wurzelbereich und die Säule dem Baumstamm.)

Günstig ist es, wenn die Förderbandeinrichtung auf einer Trägereinrichtung angeordnet ist. Dadurch lässt sich die Förderbandeinrichtung auf einfache Weise auf der Konsole positionieren und die Position ist veränderbar (beispielsweise parallel zu einer Transportrichtung).

Es ist besonders vorteilhaft, wenn die Wägeeinrichtung innerhalb oder unterhalb der Trägereinrichtung angeordnet ist. Dadurch lässt sich die Wägeeinrichtung auf einfache und platzsparende Weise an der Konsole anordnen. Sie lässt sich dadurch auch von der Trägereinrichtung entkoppeln, um so ein Wägeergebnis minimal zu beeinflussen. (Es kann beispielsweise vorgesehen sein, dass über einen Schieber (Pusher) Wägegut nach der Wägung, welches außerhalb eines Toleranzbereichs liegt, "weggestoßen" wird, um es aus der Transportkette zu nehmen. Dieser Vorgang kann einen Impuls auf die Trägereinrichtung verursachen. Durch die Anordnung der Wägeeinrichtung innerhalb oder unterhalb der Trägereinrichtung an der Konsole ist eine Impulsentkopplung erreicht.) Ferner lässt sich die Wägeeinrichtung auf einfache Weise ausgestalten, da die Konsole keinen Einfluss auf das Wägeergebnis hat, wenn diese genügend biegesteif ausgebildet ist.

Bei einer Ausführungsform umfasst die Trägereinrichtung mindestens eine Schiene. Eine solche Trägereinrichtung lässt sich auf einfache Weise herstellen. Die mindestens eine Schiene lässt sich auf einfache Weise auf die erste Konsolenwand und die zweite Konsolenwand aufsetzen, um optimiert Kräfte in die Konsole einleiten zu können.

Insbesondere ist die mindestens eine Schiene mindestens näherungsweise parallel zu einer Transportrichtung der Förderbandeinrichtung orientiert. Dadurch lassen sich auf einfache Weise von der Kombination aus der Förderbandeinrichtung und der Wägeeinrichtung ausgeübte Kräfte in die Konsolenwände einleiten und über die Seitenwände der Säule ableiten.

Beispielsweise ist die mindestens eine Schiene aus einem Flachmaterial hergestellt. Das Flachmaterial ist beispielsweise Blech. Die mindestens eine Schiene und damit die Trägereinrichtung lässt sich dadurch auf einfache Weise herstellen. Ferner lässt sich die Waagenvorrichtung mit geringem Gewicht herstellen. Außerdem lässt sich die Wägeeinrichtung so positionieren, dass die Trägereinrichtung nicht als Vorlast wirkt.

Ganz besonders vorteilhaft ist es, wenn die Trägereinrichtung sich auf der ersten Konsolenwand und der zweiten Konsolenwand abstützt. Dadurch lassen sich die von der Förderbandeinrichtung ausgeübten Kräfte direkt in die erste Konsolenwand und die zweite Konsolenwand einleiten und dabei so einleiten, dass sie in diesen im Wesentlichen parallel zu einer Oberfläche geführt sind und Querkräfte (Druckkräfte) minimiert sind.

Insbesondere ist eine Kombination aus der Förderbandeinrichtung und der Wägeeinrichtung an der ersten Konsolenwand und der zweiten Konsolenwand direkt und/oder indirekt abgestützt. Beispielsweise ist die Förderbandeinrichtung direkt abgestützt und die Wägeeinrichtung indirekt auf Querstreben, auf denen sie sitzt und die mit den Konsolenwänden verbunden sind. Dadurch lassen sich Kräfte optimiert für Flachmaterialien einleiten.

Ganz besonders vorteilhaft ist es, wenn die Konsole und die Säule so ausgebildet sind und die Förderbandeinrichtung und die Wägeeinrichtung so angeordnet sind, dass die ausgeübten Kräfte durch die erste Konsolenwand und die zweite Konsolenwand hindurch in die erste Seitenwand und die zweite Seitenwand eingeleitet sind. Wenn die Kräfte durch die erste Konsolenwand und die zweite Konsolenwand eben durchgeleitet werden, dann sind Querkräfte bzw. Druckkräfte minimiert. Es ist dann der Einsatz von Flachmaterialen wie beispielsweise Blechmaterialien möglich. Ferner ergibt sich eine hohe Torsionssteifigkeit. Dadurch lässt sich die Säule und die Konsole mit Flachmaterialien herstellen und damit auf einfache und kostengünstige Weise herstellen.

Insbesondere sind die Förderbandeinrichtung und die Wägeeinrichtung nach unten durch die Konsole abgestützt, wobei die Stützkräfte in die erste Konsolenwand und die zweite Konsolenwand eingeleitet sind. Dadurch ist die Waagenvorrichtung bezüglich der Ausbildung der Säule und der Konsole aus Flachmaterialien optimiert.

Es ist ferner günstig, wenn die erste Konsolenwand und die zweite Konsolenwand im Wesentlichen parallel zur Schwerkraftrichtung orientiert sind. Dadurch lassen sich Kräfte optimiert durch die erste Konsolenwand und die zweite Konsolenwand durchleiten und in die Säule einleiten.

Aus dem gleichen Grund ist es günstig, wenn die erste Seitenwand und die zweite Seitenwand im Wesentlichen parallel zur Schwerkraftrichtung orientiert sind. Es lassen sich dann Querkräfte (Druckkräfte) minimieren, so dass eine optimierte Ausgestaltung bezüglich des Einsatzes von Flachmaterialien möglich ist.

Die Konsole ist insbesondere ein Hohlkörper. Sie umfasst die erste Konsolenwand und die zweite Konsolenwand und eventuell dazwischenliegende Querstreben. Die Konsole muss dann nicht als massiver Körper ausgebildet werden. Sie ist dementsprechend auf einfache Weise herstellbar und weist ein relativ geringes Gewicht auf. Die Konsole ist insbesondere ein offener Hohlkörper mit (mindestens) einer offenen Seite. Sie kann dann leicht gereinigt werden und ist hygienisch vorteilhaft, da durch die offene Konstruktion keine Keimnester entstehen können.

Die nachfolgende Beschreibung bevorzugter Ausführungsformen dient im Zusammenhang mit der Zeichnung der näheren Erläuterung der Erfindung. Es zeigen:
- Figur 1: eine perspektivische Ansicht eines Ausführungsbeispiels einer erfindungsgemäßen Waagenvorrichtung;
- Figur 2: eine Seitenansicht der Waagenvorrichtung gemäß Figur 1;
- Figur 3: eine perspektivische Darstellung der Waagenvorrichtung gemäß Figur 1 ohne Förderbandeinrichtung;
- Figur 4: eine perspektivische Ansicht eines Ausführungsbeispiels einer Konsole;
- Figur 5: eine vergrößerte Darstellung eines Ausführungsbeispiels eines Verbindungsbereichs zwischen einer Konsolenwand und einer Seitenwand; und
- Figur 6: ein weiteres Ausführungsbeispiel eines Verbindungsbereichs zwischen einer Konsolenwand und einer Seitenwand.

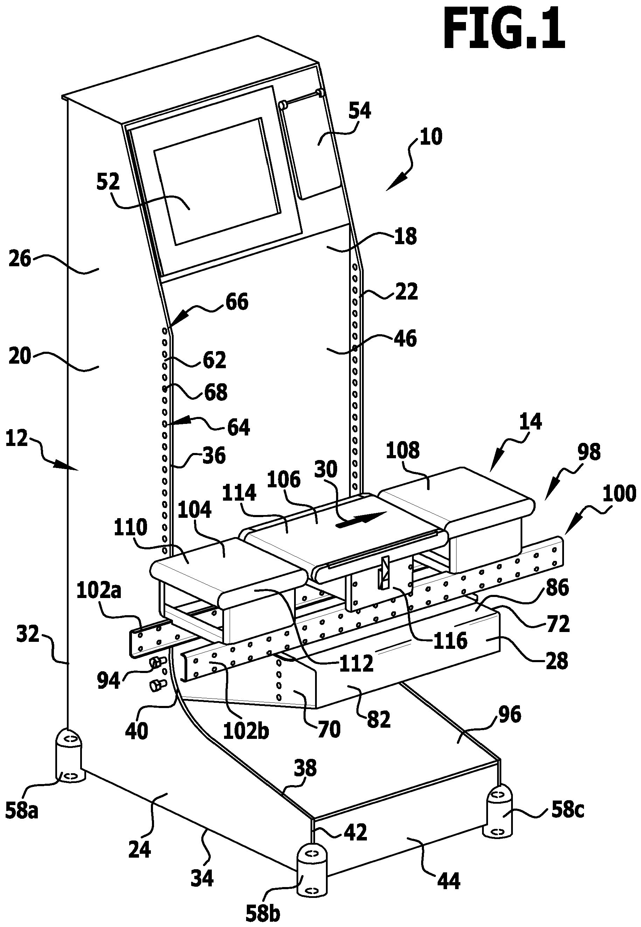

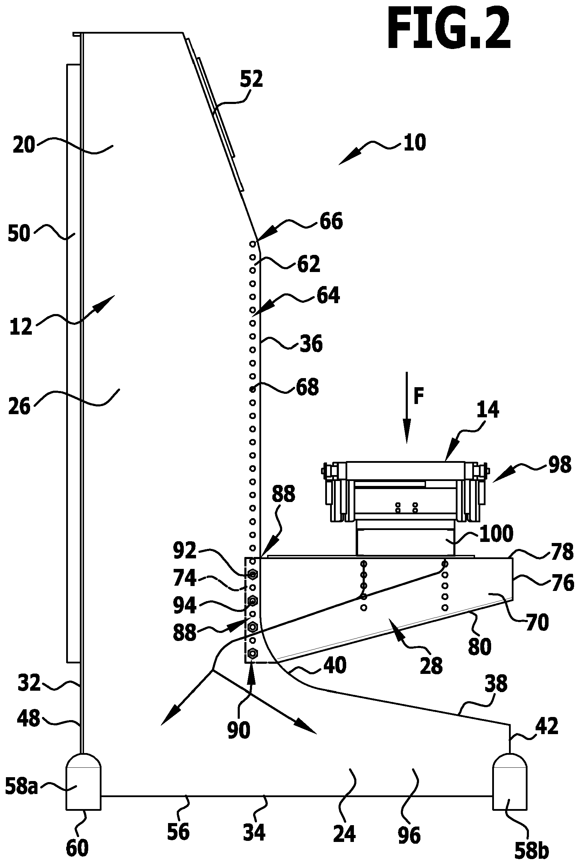

Ein Ausführungsbeispiel einer erfindungsgemäßen Waagenvorrichtung, welches in den Figuren 1 und 2 gezeigt und dort mit 10 bezeichnet ist, umfasst eine Säule 12. An der Säule 12 ist (über eine unten näher erläuterte Konsole 28) eine Förderbandeinrichtung 14 und eine Wägeeinrichtung 16 gehalten.

Die Säule 12 ist als Hohlkörper 18 ausgebildet mit einem Innenraum. Sie umfasst eine erste Seitenwand 20 und eine zweite Seitenwand 22. Die erste Seitenwand 20 und die zweite Seitenwand 22 sind beabstandet zueinander mit einem Freiraum dazwischen.

Die erste Seitenwand 20 und die zweite Seitenwand 22 sind insbesondere aus einem Flachmaterial wie Blech hergestellt. Die Blechdicke ist vorzugsweise kleiner gleich 3 mm und insbesondere kleiner gleich 2 mm.

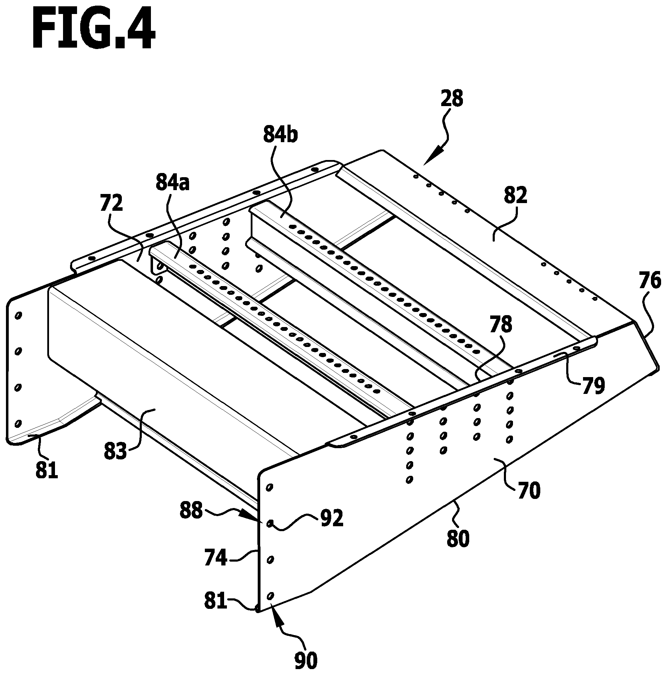

Die erste Seitenwand 20 und die zweite Seitenwand 22 weisen jeweils einen Standbereich 24 auf und einen Höhenerstreckungsbereich 26. Der Höhenerstreckungsbereich 26 ist einstückig mit dem Standbereich 24 verbunden. Über den Standbereich 24 ist die Waagenvorrichtung 10 auf einer Unterlage aufgestellt. An dem Höhenerstreckungsbereich 26 ist eine Konsole 28 (Figur 4) gehalten, an welcher wiederum die Förderbandeinrichtung 14 und die Wägeeinrichtung 16 gehalten sind.

Der Standbereich 24 weist eine Breite in einer Richtung senkrecht zu einer Transportrichtung 30 der Förderbandeinrichtung 14 auf, welche größer ist als die entsprechende Breite des Höhenerstreckungsbereichs 26. Die erste Seitenwand 20 und die zweite Seitenwand 22 haben dadurch eine mindestens näherungsweise L-Form.

Die erste Seitenwand 20 und die zweite Seitenwand 22 weisen jeweils eine Hinterseite 32 mit einer geraden Begrenzungslinie auf. Ferner weisen sie eine Unterseite 34 mit einer geraden Begrenzungslinie auf. Die Unterseite 34 ist an dem Standbereich 24 gebildet und die Hinterseite 32 an dem Standbereich 24 und dem Höhenerstreckungsbereich 26.

Der Höhenerstreckungsbereich 26 jeweils der ersten Seitenwand 20 und der zweiten Seitenwand 22 weist eine Vorderseite 36 mit einer im Wesentlichen geraden Begrenzungslinie auf. Der Standbereich 24 jeweils der ersten Seitenwand 20 und der zweiten Seitenwand 22 weist eine Oberseite 38 auf. Die Vorderseite 36 geht in die Oberseite 38 an einem Übergang 40 über, wobei die erste Seitenwand 20 und die zweite Seitenwand 22 jeweils an dem entsprechenden Übergang 40 abgerundet sind, so dass die Vorderseite 36 und die Oberseite 38 kontinuierlich und nicht in einem Sprung ineinander übergehen. (Die entsprechende Begrenzungskurve ist stetig differenzierbar.)

Der Standbereich 24 jeweils der ersten Seitenwand 20 und der zweiten Seitenwand 22 weist jeweils eine Vorderseite 42 auf, welche eine im Wesentlichen gerade Begrenzungslinie hat. Die Vorderseite 42 des Standbereichs 24 ist insbesondere im Wesentlichen parallel zu der Vorderseite 36 des Höhenerstreckungsbereichs 26 orientiert.

Die Säule 12 ist insbesondere zu der Förderbandeinrichtung 14 hin geschlossen ausgebildet. Dazu ist zwischen den Vorderseiten 42 der ersten Seitenwand 20 und der zweiten Seitenwand 22 eine Vorderwand 44 angeordnet. Diese Vorderwand 44 dient auch als Querstrebe zwischen der ersten Seitenwand 20 und der zweiten Seitenwand 22. Ferner ist zwischen der Vorderseite 36 und der Oberseite 38 der ersten Seitenwand 20 und der zweiten Seitenwand 22 eine Vorderwand 46 angeordnet. Diese folgt in ihrer Kontur dem Verlauf der ersten Seitenwand 20 und der zweiten Seitenwand 22 in diesem Bereich. Zwischen der ersten Seitenwand 20 und der zweiten Seitenwand 22 können auch im Innenraum des Hohlkörpers 28 verlaufende Querstreben angeordnet sein (in der Zeichnung nicht gezeigt).

Die Säule 12 ist weiterhin rückwärtig durch eine Hinterwand 48 (Figur 2) geschlossen.

Auch die Vorderwand 46 und die Hinterwand 48 können als Querstreben dienen.

An der Hinterwand 48 sind eine oder mehrere Türen 50 angeordnet, über die ein Zugriff auf den Innenraum des Hohlkörpers 18 der Säule 12 möglich ist.

Die Vorderwand 44 und die Vorderwand 46 sind insbesondere aus einem Flachmaterial wie Blech hergestellt. Weiterhin ist die Hinterwand 48 vorzugsweise aus einem Flachmaterial wie Blech hergestellt.

Im Bereich eines oberen Endes der Säule 12 ist eine Anzeigeeinrichtung 52 angeordnet. Diese umfasst insbesondere einen Bildschirm, auf dem beispielsweise Betriebsdaten der Waagenvorrichtung 10 anzeigbar sind.

Es kann beispielsweise auch vorgesehen sein, dass an der Säule 12 insbesondere im Bereich eines oberen Endes eine Druckereinrichtung angeordnet ist. Insbesondere ist die Druckereinrichtung als Etiketten-Druckereinrichtung ausgebildet. In Figur 1 ist ein schwenkbar angeordneter Deckel 54 angedeutet, welcher neben der Anzeigeeinrichtung 52 angeordnet ist. Dieser Deckel 54 schützt die Druckereinrichtung und insbesondere eine Etikettenausgabe, welche er abdeckt, gegen Spritzwasser.

In dem Innenraum der Säule 12 können Komponenten beispielsweise einer Steuerungseinrichtung der Waagenvorrichtung 10 angeordnet sein.

Der Hohlkörper 18 ist nach unten hin durch einen Boden 56 geschlossen. Auch der Boden 56 kann als Querstrebe zwischen der ersten Seitenwand 20 und der zweiten Seitenwand 22 ausgebildet sein. Der Hohlkörper 18 ist so ausgebildet, dass sein Innenraum gegen das Eindringen von Schmutz, Wasser usw. geschützt ist. Dadurch ist eine Reinigung seiner Außenhaut auf einfache Weise möglich.

Auch der Boden 56 ist vorzugsweise aus einem Flachmaterial wie Blech hergestellt.

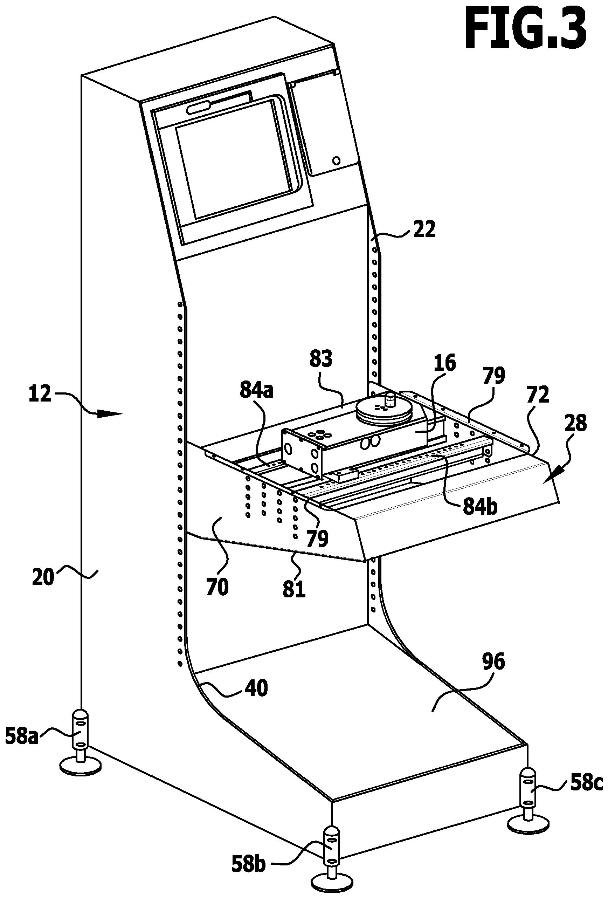

An den Eckbereichen sind jeweils höhenverstellbare Fußelemente angeordnet. Insgesamt gibt es vier Fußelemente 58a, 58b, 58c, 58d, wobei das Fußelement 58d in den Figuren 1 und 2 nicht sichtbar ist. Die Fußelemente 58a, 58b, 58c, 58d weisen jeweils eine Unterseite 60 auf, mittels welcher sie auf die Unterlage aufstellbar sind. Die Unterseite 60 ragt über den Boden 56 hinaus, so dass bei einer aufgestellten Waagenvorrichtung 10 der Boden 56 beabstandet zu den jeweiligen Unterseiten 16 der Fußelemente 58a, 58b, 58c, 58d sind. Die Unterseite kann an Tellerelementen gebildet sein, die höhenverstellbar sind (Figur 3).

Die erste Seitenwand 20 und die zweite Seitenwand 22 weisen in dem Höhenerstreckungsbereich 26 jeweils einen Bereich 62 auf, welcher über die Vorderwand 44 hinausragt. Über den Bereich 62 ist eine Fixierungseinrichtung 64 gebildet, welche zur Fixierung der Konsole 28 an der Säule 12 dient. Der Bereich 62 ist dabei jeweils durch die Vorderseite 36 nach vorne begrenzt.

Der Bereich 62 mit der Fixierungseinrichtung 64 umfasst eine Reihe 66 an durchgehenden Ausnehmungen 68. Diese durchgehenden Ausnehmungen 68 sind dabei im Wesentlichen parallel zur Transportrichtung 30 orientiert. Die Reihe 66 selber ist quer und insbesondere senkrecht zur Transportrichtung 30 orientiert. Bei aufgestellter Waagenvorrichtung 10 ist die Reihe 66 insbesondere im Wesentlichen parallel zur Schwerkraftrichtung orientiert.

(Bei korrekt positionierter Waagenvorrichtung 10 sind die erste Seitenwand 20 und die zweite Seitenwand 22 im Wesentlichen parallel zur Schwerkraftrichtung orientiert.)

Die Konsole 28 umfasst eine erste Konsolenwand 70 und eine zweite Konsolenwand 72 (Figur 4). Die erste Konsolenwand 70 und die zweite Konsolenwand 72 weisen eine lange (Hinter-)Seite 74 und eine kurze (Vorder-)Seite 76 auf. Die lange Seite 74 ist der Säule 12 zugewandt und die kurze Seite 76 ist der Säule 12 abgewandt. Die lange Seite 74 und die kurze Seite 76 sind dabei beispielsweise mindestens näherungsweise parallel zueinander und bei korrekt positionierter Waagenvorrichtung 10 beispielsweise mindestens näherungsweise parallel zur Schwerkraftrichtung ausgerichtet.

Die erste Konsolenwand 70 und die zweite Konsolenwand 72 umfassen ferner eine Oberseite 78 und eine Unterseite 80. Die Oberseite 78 weist eine im Wesentlichen gerade Begrenzungslinie auf, wobei diese Begrenzungslinie quer und insbesondere senkrecht zur Transportrichtung 30 orientiert ist. Ferner ist die Oberseite 78 vorzugsweise im Wesentlichen senkrecht zur Schwerkraftrichtung orientiert.

Die Unterseite 80 ist zur Ausbildung der Trapezform schräg zur Schwerkraftrichtung orientiert.

Die erste Konsolenwand 70 und die zweite Konsolenwand 72 weisen an ihrer Oberseite 78 und Unterseite 80 jeweils Falzungen 79 und 81 auf. Diese Falzungen 79 bzw. 81 erstrecken sich mindestens über eine Teillänge der Oberseite 78 bzw. der Unterseite 80.

Es ist dabei vorgesehen, dass die Falzung 81 an der Unterseite 80 der ersten Konsolenwand 70 und der zweiten Konsolenwand 72 nach innen gerichtet ist, d. h. die entsprechenden Falzungen 81 an der ersten Konsolenwand 70 und der zweiten Konsolenwand 72 sind einander zugewandt. Die Falzungen 79 an der Oberseite 78 der ersten Konsolenwand 70 und der zweiten Konsolenwand 72 weisen nach außen, d. h. sie sind einander abgewandt.

Durch die Falzungen 79 und 81 wird die Steifigkeit der ersten Konsolenwand 70 und der zweiten Konsolenwand 72 erhöht. Ferner wird durch die Falzungen 79 eine Auflagefläche zur Montage der Förderbandeinrichtung 14 bereitgestellt.

Weiterhin wird durch die Falzungen 81 eine Anlagefläche zur Fixierung von Querstreben bereitgestellt.

Die erste Konsolenwand 70 und die zweite Konsolenwand 72 sind jeweils aus einem Flachmaterial und insbesondere aus Blech hergestellt. Vorzugsweise sind sie aus dem gleichen Material wie die Säule 12 hergestellt. Die Blechdicke ist vorzugsweise kleiner gleich 3 mm und insbesondere kleiner gleich 2 mm.

Zwischen der ersten Konsolenwand 70 und der zweiten Konsolenwand 72 sind eine oder mehrere Querstreben 82, 83 angeordnet, die für eine Querstabilität der Konsole 28 sorgen. Beispielsweise ist eine Querstrebe 82 im Bereich der kurzen Seite 76 angeordnet, wobei diese Querstrebe 82 die erste Konsolenwand 70 und die zweite Konsolenwand 72 im Bereich der kurzen Seite 76 verbindet. Ferner ist eine Querstrebe 82 vorgesehen, welche in der Nähe der langen Seite 74 angeordnet ist und dort die erste Konsolenwand 70 und die zweite Konsolenwand 72 verbindet.

Es sind ferner stegförmige beabstandete Querstreben 84a, 84b vorgesehen, welche an einem Ende an der ersten Konsolenwand 70 und an dem anderen Ende an der zweiten Konsolenwand 72 fixiert sind. Diese Querstreben 84a, 84b dienen zur Montage und Fixierung der Wägeeinrichtung 16 an der Konsole 28 (Figur 3).

Die Konsole 28 ist dabei vorzugsweise als offener Hohlkörper ausgebildet, welcher einen Innenraum umfasst, der zwischen der ersten Konsolenwand 70 und der zweiten Konsolenwand 72 liegt. Insbesondere ist die Konsole 28 nach oben und nach unten offen. Sie kann dadurch auf einfache Weise gereinigt werden und das Entstehen von Keimnestern ist vermieden.

Weitere Querstreben 82 können durch Abkantung hergestellt werden.

Bei dem gezeigten Ausführungsbeispiel ist die Querstrebe 82 so ausgebildet, dass sie die erste Konsolenwand 70 und die zweite Konsolenwand 72 an deren Oberseite 78 mit einem Überlappungsbereich 86 überlappt.

Die Konsole 28 ist über die erste Konsolenwand 70 und die zweiten Konsolenwand 72 an der Säule 12 gehalten. Dazu ist die erste Konsolenwand 70 direkt mit der ersten Seitenwand 20 verbunden und die zweite Konsolenwand 72 ist direkt mit der zweiten Seitenwand 22 verbunden. Die erste Konsolenwand 70 und die zweite Konsolenwand 72 weisen dazu eine Fixierungseinrichtung 88 auf.

Die Fixierungseinrichtung 88 der Konsole 28 umfasst eine Reihe 90 an durchgehenden Ausnehmungen 92. Die durchgehenden Ausnehmungen 92 sind insbesondere im gleichen Abstand wie die durchgehenden Ausnehmungen 68 der Reihe 66 der Fixierungseinrichtung 64 der Säule 12 angeordnet oder mit einem Abstand, welcher zu dem Abstand der durchgehenden Ausnehmungen 68 kompatibel ist. Die Reihe 90 ist quer und insbesondere senkrecht zu der Transportrichtung 30 orientiert, wenn die Waagenvorrichtung 10 korrekt aufgestellt ist und die Konsole 28 an der Säule 12 fixiert ist.

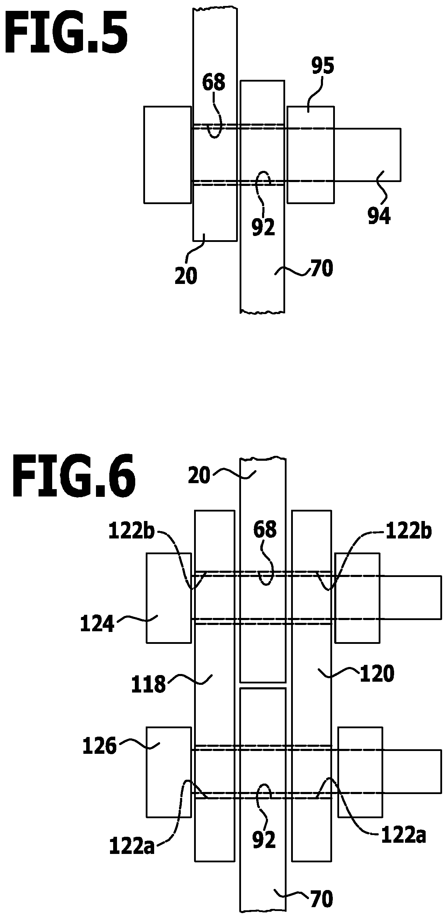

Die Konsole 28 ist an der Säule 12 dadurch gehalten, dass Fixierungselemente 94 durch die durchgehenden Ausnehmungen 68 und die durchgehenden Ausnehmungen 92 geführt sind und gegenüber Verschieblichkeit parallel zur Transportrichtung 30 gesperrt sind (Figur 5). Insbesondere ist die entsprechende Konsolenwand 70 bzw. 72 an der Seitenwand 20 bzw. 22 über eine Mehrzahl solcher Fixierungselemente 94 gehalten, um eine sichere und stabile Verbindung zu erhalten.

Die Sicherung bezüglich der Beweglichkeit in der Transportrichtung 30 kann über eine Gewindeausbildung der durchgehenden Ausnehmungen 68, 92 erfolgen oder über entsprechende Gegenelemente wie Mutterelemente 95. Beispielsweise handelt es sich bei den Fixierungselementen 94 um Schraubenelemente, welche über Muttern gesichert sein können.

Beispielsweise können auch Bolzenverbindungen vorgesehen sein.

Die erste Konsolenwand 70 ist direkt mit der ersten Seitenwand 20 verbunden und berührt diese. Die erste Konsolenwand 70 und die erste Seitenwand 20 überlappen. Dieser Überlappungsbereich ist durch die Breite des Bereichs 62 und die Breite der ersten Konsolenwand 70 an der Fixierungseinrichtung 88 bestimmt. Über die Fixierungselemente 94 lässt sich die erste Konsolenwand 70 an die erste Seitenwand 20 spannen.

Gleiches gilt auch für die zweite Konsolenwand 72 und die zweite Seitenwand 22.

Bei einem alternativen Ausführungsbeispiel der Verbindung zwischen den Konsolenwänden und den Seitenwänden, welches in Figur 6 schematisch gezeigt ist, treffen die entsprechenden Seitenwände (wie beispielsweise die erste Seitenwand 20 und die erste Konsolenwand 70) stirnseitig aufeinander. Die erste Seitenwand weist dabei wie oben beschrieben durchgehende Ausnehmungen 68 auf und die erste Konsolenwand weist wie oben beschrieben durchgehende Ausnehmungen 92 auf.

Die erste Seitenwand 20 und die erste Konsolenwand 70 weisen dabei insbesondere die gleiche Dicke auf. (Gleiches gilt sinngemäß auch für die zweite Seitenwand 22 und die zweite Konsolenwand 72.)

Jeweils beidseitig der ersten Seitenwand 20 und der ersten Konsolenwand 70 sind Haltelaschen 118, 120 angeordnet, welche jeweils beabstandete Ausnehmungen 122a, 122b aufweisen. Die Ausnehmungen 122a der Haltelaschen 118, 120 sind fluchtend zu der durchgehenden Ausnehmung 92 der ersten Konsolenwand 70 angeordnet. Die Ausnehmungen 122b der Haltelaschen 118 und 120 sind fluchtend zu der durchgehenden Ausnehmung 68 der ersten Seitenwand 20 angeordnet.

Die Haltelaschen 118 und 120 sind mit der ersten Seitenwand 20 über ein oder mehrere Fixierungselemente 124 verbunden, wobei ein Fixierungselement 124 durch die Ausnehmung 122b der Haltelasche 118, durch die durchgehende Ausnehmung 68 der ersten Wand 20 und durch die Ausnehmung 122b der Haltelasche 120 durchgetaucht ist und dabei so ausgebildet ist, dass die erste Seitenwand 20 zwischen den Haltelaschen 118 und 120 eingeklemmt ist.

Ferner ist ein Fixierungselement 126 durch die Ausnehmung 122a der Haltelasche 118, die durchgehende Ausnehmung 92 der ersten Konsolenwand 70 und die Ausnehmung 122a der Haltelasche 120 durchgetaucht und in seiner Beweglichkeit parallel zur Transportrichtung 30 gesperrt. Die erste Konsolenwand 70 ist dadurch zwischen der ersten Haltelasche 118 und der zweiten Haltelasche 120 verklemmt.

Die Haltelaschen 118 und 120 überbrücken die erste Seitenwand 20 und die erste Konsolenwand 70 und fixieren diese relativ zueinander. Die Kraft, welche durch die erste Konsolenwand 70 hindurchverläuft, wird beidseitig auf die Haltelaschen 118 und 120 aufgeteilt und über diese mit minimierten Querkräften in die erste Seitenwand 20 eingeleitet.

Über die Reihen 66 und 90 ist die Position der Konsole 28 in ihrer Höhe bezüglich einer Standeinrichtung 96, welche zwischen dem Standbereich 24 der ersten Seitenwand 20 und der zweiten Seitenwand 22 gebildet ist, feststellbar einstellbar. Die Standeinrichtung 96 ist mit Ballastmaterial wie Kies oder Beton gefüllt, um den Schwerpunkt der Waagenvorrichtung 10 "tiefer zu legen".

Die erste Konsolenwand 70 bildet eine Fortsetzung der ersten Seitenwand 20 nach vorne. Die zweite Konsolenwand 72 bildet eine Fortsetzung der zweiten Seitenwand 22 nach vorne. Der Kraftverlauf durch die erste Konsolenwand 70 und die erste Seitenwand 20 und analog dazu durch die zweite Konsolenwand 72 und die zweite Seitenwand 22 ist nur um eine Wanddicke querversetzt. Bei entsprechend dünn ausgestalteten Wänden (mit einer Dicke von 3 mm oder kleiner) ist dieser Querversatz der Kraftverlaufs minimal.

Es ist grundsätzlich auch möglich, wenn keine Höhenverstellbarkeit der Konsole 28 an der Säule 12 notwendig ist, dass die erste Konsolenwand 70 und die erste Seitenwand 20 einstückig verbunden sind und die zweite Konsolenwand 72 und die zweite Seitenwand 22 einstückig verbunden sind.

An der Konsole 28 sind die Wägeeinrichtung 16 und die Förderbandeinrichtung 14 angeordnet. Die Förderbandeinrichtung 14 sitzt auf einer Trägereinrichtung 100, welche auf der Oberseite 78 der Konsolenwände 70, 72 sitzt.

Eine Kombination 98 aus der Förderbandeinrichtung 14 mit Trägereinrichtung 100 und Wägeeinrichtung 16 ist durch die Konsole 28 abgestützt. Diese Trägereinrichtung 100 ist auf der Konsole 28 und insbesondere den Falzungen 79 abgestützt. Sie stützt sich insbesondere auf den Oberseiten 78 der ersten Konsolenwand 70 und der zweiten Konsolenwand 72 ab.

Bei einem Ausführungsbeispiel umfasst die Trägereinrichtung Schienen 102a, 102b. Diese Schienen 102a, 102b sind insbesondere aus einem Flachmaterial wie Blech hergestellt und weisen eine Profilierung auf. Die Profilierung ist beispielsweise derart, dass die Schienen 102a, 102b auf die Konsole 28 aufsetzbar sind (und an dieser fixierbar sind) und die Förderbandeinrichtung 14 auf den Schienen 102a, 102b aufsetzbar ist (und an diesen fixierbar ist).

Bei dem gezeigten Ausführungsbeispiel weisen die Schienen 102a, 102b ein Eckprofil auf, welches näherungsweise ein U-Profil mit höchstens geringer Abrundung der Ecken bzw. Kanten ist.

Die Trägereinrichtung 100 ist insbesondere parallel zur Transportrichtung 30 orientiert. Entsprechend sind die Schienen 102a, 102b mindestens näherungsweise parallel zur Transportrichtung 30 orientiert.

Die Trägereinrichtung 100 weist parallel zur Transportrichtung 30 eine Länge auf, welche mindestens so groß ist wie der Abstand zwischen der ersten Konsolenwand 70 und der zweiten Konsolenwand 72. Die Trägereinrichtung 100 ist dadurch an der ersten Konsolenwand 70 und der zweiten Konsolenwand 72 abstützbar.

Die Förderbandeinrichtung 14 umfasst drei Abschnitte, nämlich einen ersten Abschnitt 104, einen zweiten Abschnitt 106 und einen dritten Abschnitt 108. Diese drei Abschnitte 104, 106, 108 sind getrennt an der Trägereinrichtung 100 montiert. Auf den ersten Abschnitt 104 folgt in der Transportrichtung 30 der zweite Abschnitt 106 und auf den zweiten Abschnitt 106 folgt in der Transportrichtung 30 der dritte Abschnitt 108. Der zweite Abschnitt 106 ist ein mittlerer Abschnitt.

Der erste Abschnitt 104 dient zur Zuführung von Wägegut zu dem zweiten Abschnitt 106. Der dritte Abschnitt 108 dient zur Abführung von Wägegut von dem zweiten Abschnitt 106.

Der erste Abschnitt 104 umfasst ein Förderband 110 als Zuführband, welches insbesondere angetrieben ist. Das Förderband 110 ist an einem Förderbandträger 112 angeordnet, welcher wiederum an der Trägereinrichtung 100 fixiert ist.

Der dritte Abschnitt 108 ist grundsätzlich gleich wie der erste Abschnitt 104 ausgebildet. Er umfasst ein Abführband.

Der zweite Abschnitt 106 ist ein Wägeabschnitt. Er umfasst ein Förderband 114 als Wägeband, welches an einem Förderbandträger 116 geführt ist. Der Förderbandträger 116 ist auf einer Wägezelle der Wägeeinrichtung 16 abgestützt. Dadurch lässt sich das Gewicht von Wägegut, welches auf dem zweiten Abschnitt 106 transportiert wird, erfassen. (Es wird das Gesamtgewicht ermittelt, aus dem durch Subtraktion des Gewichts des Förderbands 114 mit dem Förderbandträger 116 das Gewicht des Wägeguts ermittelt wird.)

Der zweite Abschnitt 106 ist an der Konsole 28 an den Querstreben 84a, 84b fixiert. Mit dem zweiten Abschnitt 106 ist auch die Wägeeinrichtung 116 an der Konsole 28 an den Querstreben 84a, 84b montiert und dadurch an der ersten Konsolenwand 70 und der zweiten Konsolenwand 72 abgestützt.

Die Förderbandeinrichtung 14 und die Wägeeinrichtung 16 üben eine Kraft auf die Konsole 28 und die Säule 12 aus. Eine wesentliche Komponente dieser Kraft ist die Gewichtskraft. Diese Kraft wirkt auf die Trägereinrichtung 100 und wird über die Oberseiten 78 in die erste Konsolenwand 70 und die zweite Konsolenwand 72 eingeleitet. Sie verläuft durch die erste Konsolenwand 70, 72 hindurch, wie in Figur 2 angedeutet. Der Kraftverlauf liegt dabei im Wesentlichen parallel zu der ersten Konsolenwand 70 und der zweiten Konsolenwand 72. Dadurch sind Querkräfte mit einer Orientierung quer und insbesondere senkrecht zur ersten Konsolenwand 70, 72 und Torsionskräfte minimiert. Solche Querkräfte (Druckkräfte) und Torsionskräfte können zu einer Verformung eines Flachmaterials führen.

Durch die erste Konsolenwand 70 und die zweite Konsolenwand 72 werden diese Kräfte, ohne dass erhebliche Querkräfte erzeugt werden, zu der ersten Seitenwand 20 und der zweiten Seitenwand 22 geleitet und von dort in den Standbereich 74 jeweils der ersten Seitenwand 20 und der zweiten Seitenwand 22 eingeleitet. Durch die berührende Verbindung zwischen der ersten Konsolenwand 70 und der ersten Seitenwand 20 und der zweiten Konsolenwand 72 und der zweiten Seitenwand 22 erfolgt nur eine geringe Querkraftumlenkung an den Fixierungseinrichtungen 88 und 64. Dadurch wiederum lassen sich die Kräfte in die erste Seitenwand 20 und die zweite Seitenwand 22 im Wesentlichen parallel zu diesen einleiten, so dass wiederum Querkräfte und insbesondere Druckkräfte vermieden bzw. stark verringert sind.

Bei der erfindungsgemäßen Anordnung werden Kräfte, welche auf die Konsole 28 ausgeübt werden, durch den Körper der ersten Konsolenwand 70 und der ersten Seitenwand 20 sowie der zweiten Konsolenwand 72 und der zweiten Seitenwand 22 parallel (in der Ebene) hindurchgeleitet ohne wesentliche Querkraftumlenkung, um Querkräfte (Druckkräfte) zu vermeiden. Die Einleitung in die erste Seitenwand 20 und die zweite Seitenwand 22 erfolgt weiterhin mit minimalen Querkräften und die Durchleitung durch die erste Seitenwand 20 und die zweite Seitenwand 22 erfolgt ebenfalls im Wesentlichen parallel.

Dadurch ist es möglich, für die Säule 12 und die Konsole 28 Flachmaterialien und insbesondere Bleche mit geringer Dicke (unterhalb von 3 mm) einzusetzen, da Druckkräfte im Wesentlichen vermieden sind. Dadurch wiederum ist die Waagenvorrichtung 10 auf einfache und kostengünstige Weise herstellbar.

Bei der erfindungsgemäßen Waagenvorrichtung 10 ist der Kräfteverlauf in der ersten Konsolenwand 70 und der zweiten Konsolenwand 72 sowie in der ersten Seitenwand 20 und der zweiten Seitenwand 22 bezüglich der Verwendung eines Flachmaterials optimiert.

Die Konsole 28 lässt sich dabei auf einfache Weise so ausgestalten, dass der Schwerpunkt der Waagenvorrichtung 10 unterhalb oder innerhalb der Standeinrichtung 96 liegt.

Die Säule 12 lässt sich als Hohlkörper herstellen. Ferner muss die Konsole 28 nicht massiv ausgebildet werden, sondern sie lässt sich als Hohlkörper insbesondere aus einem Flachmaterial herstellen.

Die erfindungsgemäße Waagenvorrichtung 10 ist beispielsweise als Kontrollwaagenvorrichtung eingesetzt. Ihr wird verpacktes Wägegut zugeführt und es wird geprüft, ob eine Gewichtsangabe korrekt ist.

Die Waagenvorrichtung 10 ist dann insbesondere ein Element einer Fertigungs-/Kontrollkette. Durch die erfindungsgemäße Lösung lässt sie sich in ihren Abmessungen auf einfache Weise an eine gegebene Fertigungs-/ Kontrollkette anpassen. Die Form der Säule 12 und der Konsole 28 ist auf einfache Weise adaptierbar, da die Säule 12 und die Konsole 28 auf einfache Weise aus einem Flachmaterial wie Blech herstellbar sind.

Eine gegebene Waagenvorrichtung 10 lässt sich auf einfache Weise anpassen, indem die Konsole 28 in der geeigneten Höhe an der Säule 12 fixiert wird.

Beim Betrieb der Waagenvorrichtung 10 wird Wägegut über den ersten Abschnitt 104 der Förderbandeinrichtung 14 eingekoppelt. Das Wägegut wird dann dem zweiten Abschnitt 106 zugeführt und dort über die Wägeeinrichtung 16 gewogen. Das Wägeergebnis wird beispielsweise an der Anzeigeeinrichtung 52 angezeigt.

Wägegut wird dann über den dritten Abschnitt 108 der Förderbandeinrichtung 14 abgeführt.

## Patentansprüche

1. Waagenvorrichtung, umfassend eine Wägeeinrichtung (16), eine Förderbandeinrichtung (14), über welche der Wägeeinrichtung (16) Wägegut zuführbar ist, eine Säule (12), welche als Hohlkörper (18) ausgebildet ist, mit einer ersten Seitenwand (20) und einer beabstandeten zweiten Seitenwand (22), und eine Konsole (28) mit einer ersten Konsolenwand (70) und einer zweiten Konsolenwand (72),
**dadurch gekennzeichnet, dass** die erste Konsolenwand (70) direkt mit der ersten Seitenwand (20) verbunden ist und die zweite Konsolenwand (72) direkt mit der zweiten Seitenwand (22) verbunden ist, dass die erste Konsolenwand (70) eine Fortsetzung der ersten Seitenwand (20) ist, dass die zweite Konsolenwand (72) die Fortsetzung der zweiten Seitenwand (22) ist, wobei die ausgeübten Kräfte durch die erste Konsolenwand (70) und die zweite Konsolenwand (72) hindurch in die erste Seitenwand (20) und die zweite Seitenwand (22) eben durchgeleitet sind und der Kraftverlauf höchstens um eine Wanddicke querversetzt ist, und dass die Förderbandeinrichtung (14) und die Wägeeinrichtung (16) an der Konsole (28) sitzen, wobei die Konsole (28) die Förderbandeinrichtung (14) und die Wägeeinrichtung (16) hält.

2. Waagenvorrichtung nach Anspruch 1, **dadurch gekennzeichnet, dass** die erste Seitenwand (20) und die zweite Seitenwand (22) aus einem Flachmaterial, insbesondere Blech, hergestellt sind.

3. Waagenvorrichtung nach einem der vorangehenden Ansprüche, **dadurch gekennzeichnet, dass** die erste Konsolenwand (70) und die zweite Konsolenwand (72) aus einem Flachmaterial, insbesondere Blech, hergestellt sind.

4. Waagenvorrichtung nach Anspruch 2 oder 3, **dadurch gekennzeichnet, dass** das Flachmaterial eine Dicke aufweist, welche kleiner oder gleich 3 mm ist.

5. Waagenvorrichtung nach einem der vorangehenden Ansprüche, **dadurch gekennzeichnet, dass** an der ersten Seitenwand (20) und der zweiten Seitenwand (22) eine Fixierungseinrichtung (64) für die Konsole (28) angeordnet ist.

6. Waagenvorrichtung nach Anspruch 5, **dadurch gekennzeichnet, dass** die Fixierungseinrichtung (64) durchgehende Ausnehmungen (68) für Fixierungselemente (94) aufweist und die durchgehenden Ausnehmungen (68) mindestens näherungsweise parallel zu einer Transportrichtung (30) der Förderbandeinrichtung (14) orientiert sind.

7. Waagenvorrichtung nach einem der vorangehenden Ansprüche, **dadurch gekennzeichnet, dass** die erste Konsolenwand (70) und die zweite Konsolenwand (72) eine Fixierungseinrichtung (88) zur Fixierung an der Säule (12) aufweisen.

8. Waagenvorrichtung nach Anspruch 7, **dadurch gekennzeichnet, dass** die Fixierungseinrichtung (88) durchgehende Ausnehmungen (92) für Fixierungselemente (94) aufweist und die durchgehenden Ausnehmungen (92) mindestens näherungsweise parallel zu einer Transportrichtung (30) der Förderbandeinrichtung (14) orientiert sind.

9. Waagenvorrichtung nach einem der vorangehenden Ansprüche, **dadurch gekennzeichnet, dass** die Konsole (28) über Schraubenelemente (94) und/oder Bolzenelemente mittels der ersten Konsolenwand (70) und der zweiten Konsolenwand (72) an der Säule (12) fixiert ist.

10. Waagenvorrichtung nach einem der vorangehenden Ansprüche, **dadurch gekennzeichnet, dass** die erste Konsolenwand (70) und die zweite Konsolenwand (72) jeweils eine trapezförmige Gestalt aufweisen mit einer langen Seite (74), welche der Säule (12) zugewandt ist, und mit einer kurzen Seite (76), welche der Säule (12) abgewandt ist.

11. Waagenvorrichtung nach einem der vorangehenden Ansprüche, **dadurch gekennzeichnet, dass** die erste Seitenwand (20) und die zweite Seitenwand (22) jeweils einen Standbereich (24) und einen Höhenerstreckungsbereich (26) aufweisen, wobei die Waagenvorrichtung über die Standbereiche (24) auf einer Unterlage aufgestellt ist und die Konsole (28) an den Höhenerstreckungsbereichen (26) angeordnet ist und dass die erste Seitenwand (20) und die zweite Seitenwand (22) am Übergang (40) zwischen dem Höhenerstreckungsbereich (26) und dem Standbereich (24) jeweils abgerundet ausgebildet sind.

12. Waagenvorrichtung nach einem der vorangehenden Ansprüche, **dadurch gekennzeichnet, dass** die Förderbandeinrichtung (14) auf einer Trägereinrichtung (100) angeordnet ist und die Wägeeinrichtung (16) unterhalb oder innerhalb der Trägereinrichtung (100) angeordnet ist und die Trägereinrichtung (100) mindestens eine Schiene (102a, 102b) umfasst.

13. Waagenvorrichtung nach Anspruch 12, **dadurch gekennzeichnet, dass** die mindestens eine Schiene (102a, 102b) mindestens näherungsweise parallel zu einer Transportrichtung (30) der Förderbandeinrichtung (14) orientiert ist und die mindestens eine Schiene (102a, 102b) aus einem Flachmaterial, insbesondere Blech, hergestellt ist.

14. Waagenvorrichtung nach einem der vorangehenden Ansprüche, **dadurch gekennzeichnet, dass** die Förderbandeinrichtung (14) und die Wägeeinrichtung (16) nach unten durch die Konsole (28) abgestützt sind, wobei die Stützkräfte in die erste Konsolenwand (70) und die zweite Konsolenwand (72) eingeleitet sind.

15. Waagenvorrichtung nach einem der vorangehenden Ansprüche, **dadurch gekennzeichnet, dass** die Konsole (28) ein Hohlkörper ist.

## Claims

1. Weighing scales, comprising a weighing device (16), a conveyor belt device (14) by way of which material to be weighed can be delivered to the weighing device (16), a column (12) which is constructed as hollow body (18) with a first side wall (20) and a second side wall (22) spaced at a distance therefrom, and a console (28) with a first console wall (70) and a second console wall (72),
**characterized in that** the first console wall (70) is directly connected to the first side wall (20), and the second console wall (72) is directly connected to the second side wall (22), **in that** the first console wall (70) is a continuation of the first side wall (20), **in that** the second console wall (72) is the continuation of the second side wall (22), wherein the exerted forces are conducted in a plane through the first console wall (70) and the second console wall (72) into the first side wall (20) and the second side wall (22) and the force progression is offset transversely by one wall thickness at the most, and **in that** the conveyor belt device (14) and the weighing device (16) are seated on the console (28), with the console (28) holding the conveyor belt device (14) and the weighing device (16).

2. Weighing scales in accordance with claim 1, **characterized in that** the first side wall (20) and the second side wall (22) are produced from a flat material, in particular, sheet metal.

3. Weighing scales in accordance with any one of the preceding claims, **characterized in that** the first console wall (70) and the second console wall (72) are produced from a flat material, in particular, sheet metal.

4. Weighing scales in accordance with claim 2 or 3, **characterized in that** the flat material has a thickness which is less than or equal to 3 mm.

5. Weighing scales in accordance with any one of the preceding claims, **characterized in that** a fixing device (64) for the console (28) is arranged at the first side wall (20) and the second side wall (22).

6. Weighing scales in accordance with claim 5, **characterized in that** the fixing device (64) has continuous openings (68) for fixing elements (94), and the continuous openings (68) are oriented at least approximately parallel to a transport direction (30) of the conveyor belt device (14).

7. Weighing scales in accordance with any one of the preceding claims, **characterized in that** the first console wall (70) and the second console wall (72) have a fixing device (88) for fixing to the column (12).

8. Weighing scales in accordance with claim 7, **characterized in that** the fixing device (88) has continuous openings (92) for fixing elements (94), and the continuous openings (92) are oriented at least approximately parallel to a transport direction (30) of the conveyor belt device (14).

9. Weighing scales in accordance with any one of the preceding claims, **characterized in that** the console (28) is fixed to the column (12) by screw elements (94) and/or bolt elements by means of the first console wall (70) and the second console wall (72).

10. Weighing scales in accordance with any one of the preceding claims, **characterized in that** the first console wall (70) and the second console wall (72) each have a trapezoidal shape with a long side (74) facing the column (12) and with a short side (76) facing away from the column (12).

11. Weighing scales in accordance with any one of the preceding claims, **characterized in that** the first side wall (20) and the second side wall (22) each have a stand area (24) and a height extension area (26), the weighing scales being positioned on a base via the stand areas (24) and the console (28) being arranged at the height extension areas (26), and **in that** the first side wall (20) and the second side wall (22) are each of rounded-off construction at the transition (40) between the height extension area (26) and the stand area (24).

12. Weighing scales in accordance with any one of the preceding claims, **characterized in that** the conveyor belt device (14) is arranged on a support device (100), and the weighing device (16) is arranged underneath or within the support device (100), and the support device (100) comprises at least one rail (102a, 102b).

13. Weighing scales in accordance with claim 12, **characterized in that** the at least one rail (102a, 102b) is oriented at least approximately parallel to a transport direction (30) of the conveyor belt device (14), and the at least one rail (102a, 102b) is produced from a flat material, in particular, sheet metal.

14. Weighing scales in accordance with any one of the preceding claims, **characterized in that** the conveyor belt device (14) and the weighing device (16) are supported downwards by the console (28), and the supporting forces are introduced into the first console wall (70) and the second console wall (72).

15. Weighing scales in accordance with any one of the preceding claims, **characterized in that** the console (28) is a hollow body.

## Revendications

1. Dispositif de balance, comprenant un système de pesage (16), un système de bande transporteuse (14), par l'intermédiaire duquel un article à peser peut être amené au système de pesage (16), une colonne (12), laquelle est réalisée sous la forme d'un corps creux (18), pourvu d'une première paroi latérale (20) et d'une deuxième paroi latérale (22) espacée, et une console (28) pourvue d'une première paroi de console (70) et d'une deuxième paroi de console (72), **caractérisé en ce que** la première paroi de console (70) est reliée directement à la première paroi latérale (20) et la deuxième paroi de console (72) est reliée directement à la deuxième paroi latérale (22), **en ce que** la première paroi de console (70) est un prolongement de la première paroi latérale (20), **en ce que** la deuxième paroi latérale (72) est le prolongement de la deuxième paroi latérale (22), les forces exercées à travers la première paroi de console (70) et la deuxième paroi de console (72) étant amenées à passer précisément dans la première paroi latérale (20) et la deuxième paroi latérale (22) et la variation de force étant décalée transversalement au maximum d'une épaisseur de paroi, et **en ce que** le système de bande transporteuse (14) et le système de pesage (16) reposent sur la console (28), la console (28) portant le système de bande transporteuse (14) et le système de pesage (16).

2. Dispositif de balance selon la revendication 1, **caractérisé en ce que** la première paroi latérale (20) et la deuxième paroi latérale (22) sont faites d'un matériau plat, en particulier de tôle.

3. Dispositif de balance selon l'une quelconque des revendications précédentes, **caractérisé en ce que** la première paroi de console (70) et la deuxième paroi de console (72) sont faites d'un matériau plat, en particulier de tôle.

4. Dispositif de balance selon la revendication 2 ou 3, **caractérisé en ce que** le matériau plat présente une épaisseur inférieure ou égale à 3 mm.

5. Dispositif de balance selon l'une quelconque des revendications précédentes, **caractérisé en ce qu'**un système de fixation (64) pour la console (28) est agencé sur la première paroi latérale (20) et la deuxième paroi latérale (22).

6. Dispositif de balance selon la revendication 5, **caractérisé en ce que** le système de fixation (64) présente des évidements traversants (68) pour des éléments de fixation (94) et les évidements traversants (68) sont orientés au moins sensiblement parallèlement à une direction de transport (30) du système de bande transporteuse (14).

7. Dispositif de balance selon l'une quelconque des revendications précédentes, **caractérisé en ce que** la première paroi de console (70) et la deuxième paroi de console (72) comportent un système de fixation (88) pour la fixation à la colonne (12).

8. Dispositif de balance selon la revendication 7, **caractérisé en ce que** le système de fixation (88) présente des évidements traversants (92) pour des éléments de fixation (94) et les évidements traversants (92) sont orientés au moins sensiblement parallèlement à une direction de transport (30) du système de bande transporteuse (14).

9. Dispositif de balance selon l'une quelconque des revendications précédentes, **caractérisé en ce que** la console (28) est fixée par des éléments vis (94) et/ou des éléments boulons à la colonne (12) au moyen de la première paroi de console (70) et de la deuxième paroi de console (72).

10. Dispositif de balance selon l'une quelconque des revendications précédentes, **caractérisé en ce que** la première paroi de console (70) et la deuxième paroi de console (72) présentent chacune une forme trapézoïdale pourvue d'un grand côté (74), lequel est tourné vers la colonne (12), et d'un petit côté (76), lequel est opposé à la colonne (12).

11. Dispositif de balance selon l'une quelconque des revendications précédentes, **caractérisé en ce que** la première paroi latérale (20) et la deuxième paroi latérale (22) présentent chacune une zone de support (24) et une zone d'étendue en hauteur (26), dans lequel le dispositif de balance est posé sur une base par l'intermédiaire des zones de support (24) et la console (28) est agencée sur les zones d'étendue en hauteur (26) et **en ce que** la première paroi latérale (20) et la deuxième paroi latérale (22) sont respectivement arrondies au niveau de la transition (40) entre la zone d'étendue en hauteur (26) et la zone de support (24).

12. Dispositif de balance selon l'une quelconque des revendications précédentes, **caractérisé en ce que** le système de bande transporteuse (14) est agencé sur un système de support (100) et le système de pesage (16) est agencé au-dessous du système de support (100) ou à l'intérieur de celui-ci et le système de support (100) comporte au moins un rail (102a, 102b).

13. Dispositif de balance selon la revendication 12, **caractérisé en ce que** ledit au moins un rail (102a, 102b) est orienté au moins sensiblement parallèlement à une direction de transport (30) du système de bande transporteuse (14) et ledit au moins un rail (102a, 102b) est fait d'un matériau plat, en particulier de tôle.

14. Dispositif de balance selon l'une quelconque des revendications précédentes, **caractérisé en ce que** le système de bande transporteuse (14) et le système de pesage (16) sont soutenus vers le bas par la console (28), dans lequel les forces d'appui sont appliquées dans la première paroi de console (70) et la deuxième paroi de console (72).

15. Dispositif de balance selon l'une quelconque des revendications précédentes, **caractérisé en ce que** la console (28) est un corps creux.
